# EUROPEAN PATENT SPECIFICATION

(11) **EP 2 735 126 B1**
(45) Date of publication and mention of the grant of the patent: **06.05.2015**
(21) Application number: 12751608.6
(22) Date of filing: 10.07.2012
(51) Int. Cl.: H04L 12/70, G01V 1/40

(54) **SIGNALING A LABEL SWITCHED PATH (LSP) TUNNELING MODEL**
SIGNALISIERUNG EINES LABEL-GESCHALTETEN TUNNELUNGSMODELLS
SIGNALISATION D'UN MODÈLE DE TUNNELLISATION DE CHEMIN À COMMUTATION D'ÉTIQUETTES (LSP)

(30) Priority: 18.07.2011 US 201113185456
(43) Date of publication of application: 28.05.2014
(73) Proprietor: Telefonaktiebolaget L M Ericsson (publ), 164 83 Stockholm (SE)
(72) Inventor: KINI, Sriganesh, Fremont, California 94539 (US); D'SOUZA, Pramodh, San Jose, California 95117 (US)
(74) Representative: Rees, Simon John Lewis
(86) International application number: PCT/IB2012/053532
(87) International publication number: WO 2013/011420

(56) References cited:
- WO-A1-03/079614
- US-A1- 2004 221 051

## Description

### FIELD

Embodiments of the invention relate to the field of networking; and more specifically, to signaling a Label Switched Path (LSP) tunneling model.

### BACKGROUND

Label Distribution Protocol (LDP) (e.g., described in RFC 5036) is widely deployed in Multiprotocol Label Switching (MPLS) (e.g., MPLS is described in RFC 3031) networks as a signaling protocol for label switched path (LSPs). LDP LSPs are used as transport LSPs in applications such as Border Gateway Protocol (BGP) free core, Layer 2 Virtual Private Network (L2VPN), and other applications, by stacking the LDP LSP label (the tunnel label) over the application label.

These applications may have different requirements for the tunneling model to be applied to the transport LSP. The tunneling model defines the semantics on how processing is to be performed (e.g., Differentiated Services (DiffServ) processing, the time-to-live (TTL) treatment, etc.). Example tunneling models include a pipe tunneling model, a short-pipe tunneling model, and a uniform tunneling model. Tunneling models and DiffServ processing for those tunneling models are described, for example, in RFC 3270. In general, the LSR behavior for the pipe tunneling model, the short-pipe tunneling model, and the uniform tunneling model only differ when performing a push operation or a pop operation. Thus, transit LSRs that perform swap only operations are generally not affected by the different tunneling model types. TTL processing for the different tunneling models is described in RFC 3443. By way of a generic example, in a pipe tunneling model (either regular pipe or short-pipe), the transport LSP hides the intermediate MPLS nodes between the LSP ingress and egress; whereas in a uniform tunneling model, each network element that the LSP traverses is visible to an external network element. Penultimate Hop Popping (PHP) may also be used in the short-pipe model and the uniform model (PHP cannot be used in the regular pipe model).

Network elements in the MPLS may provide integrated services and simultaneously support multiple applications that require different tunneling models. For example, an edge network element may support a BGP free core application that requires a uniform tunneling model and an L2VPN application that requires a pipe tunneling model (either regular pipe or short-pipe). Separate transport LSPs will be established for each of the applications. However, if the edge network element is acting as the ingress network element, it does not know which transport LSP provides the appropriate tunneling model requirement for the particular application. Thus, even though multiple LSPs may be established, the ingress network element does not know which LSP to choose for the particular application. In addition, a transit network element that is the PHP network element also does not know which tunneling model to apply when PHP is signaled for the transport LSP. A prior art can be found in US2004/221051.

### SUMMARY

Signaling a Label Switched Path (LSP) tunneling model is described. In one embodiment, a network element that is acting as an egress network element in a Multiprotocol Label Switching (MPLS) network signals multiple LSPs for multiple disparate applications provided in the MPLS network that each require a different type of tunneling model. The network element transmits a first label mapping message for one of the LSPs that includes an indication of a first tunneling model type applicable for that LSP. That LSP is to be used to transport traffic in the MPLS network for a first one of the disparate applications that requires the indicated first tunneling model type. The network element further transits a second label mapping message for a second one of the LSPs that includes an indication of a second tunneling model type applicable for that LSP. That LSP is to be used to transport traffic in the MPLS network for a second one of the disparate applications that requires the indicated second tunneling model type. The first tunneling model type and the second tunneling model type are different. In one embodiment, the first tunneling model type is a uniform tunneling model and the second tunneling model type is a pipe tunneling model (regular pipe or short-pipe).

In one embodiment, a network element configured to act as an egress network element in a MPLS network includes one or more cards each including a set of one or more processors that are coupled a non-transitory machine-readable storage medium having stored therein, an application control module and a Label Distribution Protocol (LDP) module. The application control module is adapted to configure multiple disparate applications for use in the MPLS network where each application requires a different type of tunneling model. The LDP module is adapted to transmit a label mapping message to signal a different label switched path (LSP) for each of the configured applications, where each label mapping message includes an indication of a tunneling model type applicable to that LSP.

In one embodiment, a network element that is acting as an ingress network element in a MPLS network participates in multiple disparate applications provided in the MPLS network that each require a different type of tunneling model. The network element receives a first label mapping message for a first LSP between the ingress network element and the egress network element. The first label mapping message includes an indication of a first tunneling model type that is supported on the first LSP. The network element installs one or more forwarding entries according to the received first label mapping. The network element receives a second label mapping message for a second LSP between the ingress network element and the egress network element. The second label mapping message includes an indication of a second tunneling model type that is supported on the second LSP. The network element installs one or more forwarding entries according to the received second label mapping message. The network element associates a first one of the disparate applications that requires the first tunneling model with the first LSP and associates a second one of the plurality of disparate applications that requires the second tunneling module with the second LSP.

In one embodiment, a network element configured to act as an ingress network element in an MPLS network includes one or more cards that each include a set of one or more processors that are coupled a non-transitory machine-readable storage medium having stored therein an LDP module and an application control module. The LDP module is adapted to receive a label mapping message for each one of multiple LSPs for use in the MPLS network respectively. Each LSP spans between the ingress network element and an egress network element. Each label mapping message includes an indication of a tunneling model type applicable to that LSP. The application control module is adapted to configure multiple disparate applications for use in the MPLS network where each application requires a different type of tunneling model. For each of those applications, the application control module is adapted to associate that application with one of the LSPs based on the type of tunneling model required for that application and the tunneling model type supported by that LSP.

Signaling the tunneling model type applicable for the LSPs allows the ingress network element to select an LSP for transport of application traffic depending on the requirements of that application, without requiring explicit configuration on the ingress network element. In addition, if penultimate hop popping (PHP) is used, the PHP network element can use the signaled tunneling model type so that it can apply the appropriate tunneling model processing when performing a pop operation, without requirement explicit configuration of the PHP network element.

### BRIEF DESCRIPTION OF THE DRAWINGS

The invention may best be understood by referring to the following description and accompanying drawings that are used to illustrate embodiments of the invention. In the drawings:
Figure 1 illustrates an exemplary network according to one embodiment;
Figure 2 is a block diagram illustrating an exemplary architecture of an edge network element according to one embodiment;
Figure 3 is a flow diagram illustrating exemplary operations performed on an egress edge network element for signaling an LSP tunneling model according to one embodiment;
Figure 4 illustrates an exemplary format for a tunnel model TLV according to one embodiment;
Figure 5 is a flow diagram illustrating exemplary operations performed on an ingress edge network element for processing a label mapping message that includes an indication of a tunneling model applicable for the LSP according to one embodiment;
Figure 6 is a flow diagram illustrating exemplary operations performed on an ingress edge network element for mapping an application with a LSP based on the tunneling requirements of that application according to one embodiment;
Figure 7 is a block diagram illustrating an exemplary architecture of a core network element according to one embodiment;
Figure 8 is a flow diagram illustrating exemplary operations performed on a core network element for processing label mapping messages with an indication of the LSP tunneling model according to one embodiment; and
Figure 9 is a flow diagram illustrating exemplary operations performed on a core network element for processing labeled packets according to one embodiment.

### DESCRIPTION OF EMBODIMENTS

In the following description, numerous specific details are set forth. However, it is understood that embodiments of the invention may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

A method and apparatus for signaling a label switched path (LSP) tunneling model is described. In one embodiment, when signaling a transport LSP for an application that requires a particular tunneling model, a network element that is acting as an egress network element in a Multiprotocol Label Switching (MPLS) network transmits a label mapping message that includes an indication of the tunneling model applicable for that LSP. In one embodiment, the tunneling model indication is included in a Type, Length, Value (TLV) element in the label mapping message. A transit Label Switch Router (LSR) that receives the label mapping message with the tunneling model indication (e.g., the tunneling model TLV) propagates the same indication in upstream label mapping messages. The network element that is acting as an ingress network element in the MPLS network uses the tunneling model indication in the label mapping message and maps the application with the appropriate LSP.

In one embodiment, the egress network element signals each separate LSP with a tunneling model indication with a different Forwarding Equivalence Class (FEC). In another embodiment, the egress network element signals multiple LSPs with different tunneling model indications with the same FEC. In such an embodiment, a transit LSR that receives multiple label mappings with different tunneling model indications for the same FEC allocates and advertises a separate label mapping upstream for each such indication.

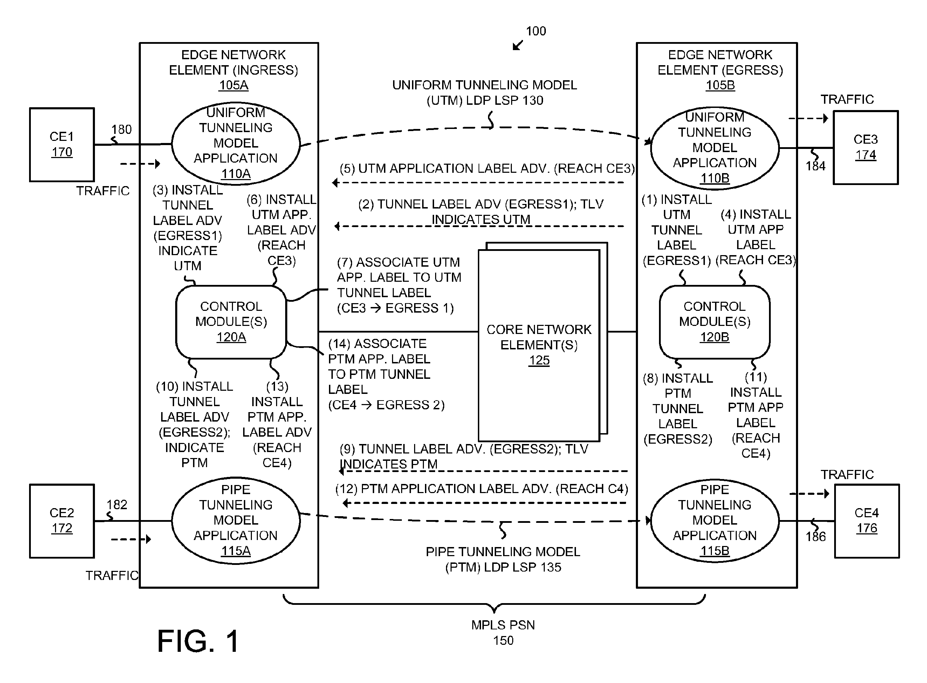

Figure 1 illustrates an exemplary network according to one embodiment. The network 100 includes the edge network elements 105A-B, the customer edge network elements 170-176, and the core network element(s) 125. As used herein, a network element (e.g., a router, switch, bridge) is a piece of networking equipment, including hardware and software, that communicatively interconnects other equipment on the network (e.g., other network elements, end stations). The edge network elements 105A-B are on the edge of the MPLS packet switched network (PSN) 150. For purposes of explanation, the edge network element 105A acts as an ingress network element in the MPLS network 150 and the edge network element 105B acts as an egress network element in the MPLS network 150 (of course, the edge network elements 105A-B can each operate as an ingress or egress network element). The edge network elements 105A-B establish LSPs that traverse through the core network element(s) 125. The core network element(s) 125 are transit network elements in the MPLS network 150. In some situations, one or more of the core network element(s) 125 may be the penultimate hop and perform penultimate hop popping (PHP).

The edge network elements 105A-B provide integrated services and simultaneously support multiple applications that require different tunneling models. For example, the edge network elements 105A-B support the uniform tunneling model application 110A-B respectively and the pipe tunneling model application 115A-B respectively. The uniform tunneling model application 110A-B is an application that requires the uniform tunneling model (e.g., BGP free core). The pipe tunneling model application 115A-B is an application that requires either the pipe tunneling model or the short-pipe tunneling model (e.g., L2VPN, or other pseudowire application).

The customer edge 1 (CE1) network element 170 and the CE3 network element 174 are coupled with the edge network elements 105A-B respectively and participate in the uniform tunneling model application 110. For example, the CE1 network element 170 connects with the edge network element 105A over an IP interface 180 for the uniform tunneling model application 110A. The CE3 network element 174 similarly connects with the edge network element 105B over an IP interface 184 for the uniform tunneling model application 110B.

The CE2 network element 172 and the CE4 network element 176 are coupled with the edge network elements 105A-B respectively and participate in the pipe tunneling model application 115. For example, the CE2 network element 172 connects with the edge network element 105A over the access circuit 182 for the pipe tunneling model application 115A. Similarly, the CE4 network element 176 connects with the edge network element 105B over the access circuit 186 for the pipe tunneling model application 115B.

The edge network elements 105A-B receive configuration (e.g., from a network administrator) for the uniform tunneling model application 110 and the pipe tunneling model application 115. For example, the IP interfaces 180 and 184 and the access circuits 182 and 186 are configured on the edge network elements 105A-B respectively. The configuration may also include other parameters including quality of service (QoS), etc. By way of example and with reference to Figure 1, traffic is sent from the CE1 network element 170 to the CE3 network element 174 using the uniform tunneling model application 110 and traffic is sent from the CE2 network element 172 to the CE4 network element 176 using the pipe tunneling model application 115.

In one embodiment, after configuring an application, the egress network element determines the type of application including the tunneling model type required for that application and automatically includes the appropriate tunneling model indicator in the label mapping message for the transport LSP for that application.

The uniform tunneling model (UTM) LDP LSP 130 is established between the edge network elements 105A-B. The UTM LDP LSP 130 is an LDP LSP in which the uniform tunneling model is applicable. The type of tunneling model applicable for the LSP 130 (the uniform tunneling model) is propagated from the edge network element 105B to the edge network element 105A during signaling of the LSP 130. Once the LSP 130 is established (and mapped to the uniform tunneling model application 110A), the UTM LDP LSP 130 will carry traffic sent from the CE1 network element 170 and destined to the CE3 network element 174 for the uniform tunneling model application 110. For example, upon receiving a packet from the CE1 network element 170 that is destined for the CE3 network element 174, the edge network element 105A stacks the tunnel label for the LSP 130 onto an application label used by the network element 105B to reach the CE3 network element 174 and transmits the labeled packet to the next hop core network element 125.

The pipe tunneling model (PTM) LDP LSP 135 is also established between the edge network elements 105A-B. The PTM LDP LSP 135 is an LDP LSP in which the pipe tunneling model or the short-pipe tunneling model is applicable. The specific type of tunneling model applicable for the LSP 135 (the pipe tunneling model or the short-pipe tunneling model) is propagated from the edge network element 105B to the edge network element 105A during signaling of the LSP 135. Once the LSP 135 is established (and mapped to the pipe tunneling model application 115A), the PTM LDP LSP 135 will carry traffic sent from the CE2 network element 172 and destined to the CE4 network element 176 for the pipe tunneling model application 115. For example, upon receiving a packet from the CE2 network element 172 that is destined for the CE4 network element 176, the edge network element 105A stacks the tunnel label for the LSP 135 onto an application label used by the network element 105B to reach the CE4 network element 176 and transmits the labeled packet to the next hop core network element 125.

The operations illustrated in Figure 1 are exemplary operations for establishing the LSP 130 and the LSP 135 including signaling the applicable tunneling model type for each LSP and mapping the uniform tunneling model application 110A and the pipe tunneling model application 115A to the appropriate LSP (LSP 130 and 135 respectively). For example, the operations 1-7 describe signaling the LSP 130 with the applicable tunneling model type for the LSP 130 and mapping the uniform tunneling model application 110A with the LSP 130, and the operations 8-14 describe signaling the LSP 135 with the applicable tunneling model type for the LSP 135 and mapping the pipe tunneling model application 115A with the LSP 135. It should be understood that certain ones of the operations illustrated in Figure 1 can be performed in a different order. For example, the LSPs 130 and 135 may be established prior to the application mapping.

At operation 1 of Figure 1, the control module(s) 120B installs a tunnel label egress1 for the uniform tunneling model application 110B in one or more of its forwarding structures. For example, the control module(s) 120B installs the tunnel label egress1 in its Incoming Label Map (ILM) for the configured uniform tunneling model application 110B. The ILM is a data structure used upon labeled packets being received. In one embodiment the ILM is stored on one or more forwarding cards (sometimes referred to as line cards) of the edge network element 105B.

At operation 2, the control module(s) 120B cause a label mapping message with the tunnel label for the uniform tunneling model application to be transmitted to the next upstream LSR on the path (one of the core network element(s) 125). The label mapping message includes a mapping of the tunnel label egress1 with a FEC of the egress network element 105B. In one embodiment, the FEC is associated with the uniform tunneling model application 110B (a separate FEC is associated with the pipe tunneling model application 115B), while in other embodiments the same FEC is associated with the uniform tunneling model application 110B and the pipe tunneling model application 115B. The label mapping message also includes an indication that the uniform tunneling model is to be applied for this LSP. By way of a specific example, an LDP control module advertises an LDP label mapping message that includes a FEC TLV that specifies the FEC component of the label mapping, a label TLV that specifies the label component of the label mapping, and a tunnel model TLV that specifies the tunneling model applicable for the resulting LSP. Since LDP typically follows the shortest path as determined by an Interior Gateway Protocol (IGP), the LDP label mapping message that includes the tunnel model TLV is transmitted to the next hop as indicated by IGP.

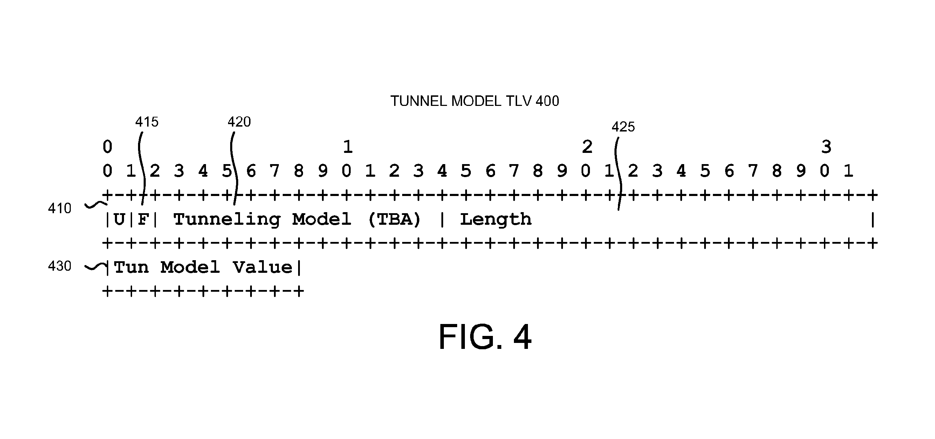

Figure 4 illustrates an exemplary format for a tunnel model TLV according to one embodiment. The tunnel model TLV 400 includes the U bit 410, the F bit 415, the type field 420 (which indicates that this TLV is for signaling the tunnel model), the length field 425, and the value field 430, which indicates the tunneling model value. The U bit 410 is 1. The F bit 415 is 0 if the label is a NULL label (used to indicate PHP) and is 1 if the label is a non-NULL label. The tunneling model value in the value field 430 indicates the tunneling model. For example, the uniform tunneling model may be indicated with a value of 0, the pipe tunneling model may be indicated with a value of 1, and the short-pipe tunneling model may be indicated with a value of 2. The format for the FEC TLV and the label TLV may be similar to that described in RFC 5036.

The tunnel label advertisement traverses through the core network element(s) 125 and will be received by the edge network element 105A. Each of the core network element(s) 125 allocates and transmits their own label for the FEC and installs an appropriate label forwarding entry (e.g., in its ILM). The core network element(s) 125, however, propagate the same tunneling model indication (e.g., the same TLV) as transmitted by the edge network element 105B. Thus, the edge network element 105A receives a label mapping message from an upstream core network element 125 that includes a label allocated by that core network element for the FEC and also includes the indication of the tunneling model type applicable for that LSP (e.g., a tunnel model TLV), which in this case indicates that the uniform tunneling model should be applied for this LSP.

In one embodiment, the tunnel label egress 1 is a NULL label that is used to establish PHP mode in the penultimate hop. The one of the core network element(s) 125 that is the penultimate hop (who receives the NULL label) also stores an indication of the tunneling model type applicable for that LSP such that upon receiving a labeled packet for that LSP it will pop the outer label and apply the tunneling model processing applicable for that LSP.

At operation 3, the control module(s) 120A install the tunnel label egress1 in one or more of its forwarding structures (e.g., in its Next Hop Label Forwarding Entry (NHLFE) structure). In one embodiment, the NHLFE structure is stored on one or more forwarding cards (sometimes referred to as line cards) of the edge network element 105A. The control module(s) 120A also stores an indication of the tunneling model type for the LSP corresponding to the tunnel label. Thus, the LSP tunneling model type for the advertised LSP is signaled by the egress network element and is now known by the ingress network element (the edge network element 105A). The ingress network element can now use this information to map an application that requires a specific tunneling model type with an LSP that supports that tunneling model type.

In addition to the tunnel label, the edge network element 105B also advertises an application label. For example, the edge network element 105B advertises an application label to reach CE3 network element 174. Thus, at operation 4, the control module(s) 120B install a UTM application label (e.g., to reach CE3) in one or more of its forwarding structures. At operation 5, the control module(s) 120B cause the UTM application label to be advertised to the next upstream LSR on the path (to one of the core network element(s) 125). In one embodiment, LDP is used to advertise and signal the application label. Thus, by way of a specific example, an LDP control module of the edge network element 105B transmits an LDP label mapping message that includes a FEC TLV that specifies the FEC component of the label mapping (the FEC corresponds with the CE3 network element 174) and a label TLV that specifies the label component of the label mapping. In another embodiment BGP is used to carry the application label.

The application label advertisement traverses through the core network element(s) 125 and will be received by the edge network element 105A. The core network element(s) 125 forward the application label advertisement without installing a label mapping for the application label (if the core network element 125 is a PHP network element, it installs the label mapping for the application label). In one embodiment, the forwarding is performed as a result of the U and F bits of the application label advertisement being set.

At operation 6, the control module(s) 120A install the UTM application label in one or more of its forwarding structures (e.g., in its FEC to NHLFE (FTN) structure). The control module(s) 120A determine that the application label is for the UTM application 110A based on the type of label and the message format. Since the edge network element 105A knows the tunneling model type of the LSP, it can map the application with the appropriate LSP. At operation 7, the control module(s) 120A associate the UTM application label with the LDP LSP 130. By way of a specific example, the control module(s) 120A configures its forwarding structure(s) such that upon receiving a packet from the CE1 network element 170 that is destined to the CE3 network element 174, the UTM application label is placed on the label stack and the UTM tunnel label is stacked over the application label. For example, the next hop of the NHLFE entry for the UTM application label points to the NHLFE entry for the UTM tunnel label.

As previously described, the edge network elements 105A-B support multiple applications. The operations 8-14 are similar to operations 1-7 described above. At operation 8, the control module(s) 120B installs a tunnel label egress2 for the pipe tunneling model application 115B in one or more of its forwarding structures. For example, the control module(s) 120B installs the tunnel label egress2 in its Incoming Label Map (ILM).

At operation 9, the control module(s) 120B cause a label mapping message with the tunnel label for the uniform tunneling model application to be transmitted to the next upstream LSR on the path (one of the core network element(s) 125). The label mapping message includes a mapping of the tunnel label egress2 with a FEC of the egress network element 105B. In one embodiment, the FEC is associated with the pipe tunneling model application 115B (a separate FEC is associated with the uniform tunneling model application 110B), while in other embodiments the same FEC is associated with the uniform tunneling model application 110B and the pipe tunneling model application 115B. The label mapping message also includes an indication that the pipe tunneling model is to be applied for this LSP. By way of a specific example, an LDP control module advertises an LDP label mapping message that includes a FEC TLV that specifies the FEC component of the label mapping, a label TLV that specifies the label component of the label mapping, and a tunnel model TLV that specifies the tunneling model applicable for the resulting LSP. Since LDP typically follows the shortest path as determined by an Interior Gateway Protocol (IGP), the LDP label mapping message that includes the tunnel model TLV is transmitted to the next hop as indicated by IGP.

The tunnel label advertisement traverses through the core network element(s) 125 and will be received by the edge network element 105A. Each of the core network element(s) 125 allocates and transmits their own label for the FEC and installs an appropriate label forwarding entry (e.g., in its ILM). The core network element(s) 125, however, propagate the same tunneling model indication (e.g., the same TLV) as transmitted by the edge network element 105B. Thus, the edge network element 105A receives a label mapping message from an upstream core network element 125 that includes a label allocated by that core network element for the FEC and also includes the indication of the tunneling model type applicable for that LSP (e.g., a tunnel model TLV), which in this case indicates that the pipe tunneling model should be applied for this LSP.

In one embodiment, the tunnel label egress2 is a NULL label that is used to establish PHP mode in the penultimate hop. PHP may be used if the pipe tunneling model application 115B is of the short-pipe variant. The one of the core network element(s) 125 that is the penultimate hop (who receives the NULL label) also stores an indication of the tunneling model type applicable for that LSP such that upon receiving a labeled packet for that LSP it will pop the outer label and apply the tunneling model processing applicable for that LSP.

At operation 10, the control module(s) 120A install the tunnel label egress2 in one or more of its forwarding structures (e.g., in its NHLFE structure). The control module(s) 120A also stores an indication of the tunneling model type for the LSP corresponding to the tunnel label (which in this case is a pipe tunneling model). Thus, the LSP tunneling model type for the advertised LSP is signaled by the egress network element and is now known by the ingress network element (the edge network element 105A). The ingress network element can now use this information to map an application that requires a specific tunneling model type with an LSP that supports that tunneling model type.

In addition to the tunnel label, the edge network element 105B also advertises an application label. For example, the edge network element 105B advertises an application label to reach CE4 network element 176. Thus, at operation 11, the control module(s) 120B install a PTM application label (e.g., to reach CE4) in one or more of its forwarding structures. At operation 12, the control module(s) 120B cause the PTM application label to be advertised to the next upstream LSR on the path (to one of the core network element(s) 125). In one embodiment, LDP is used to advertise and signal the application label. Thus, by way of a specific example, an LDP control module of the edge network element 105B transmits an LDP label mapping message that includes a FEC TLV that specifies the FEC component of the label mapping (the FEC corresponds with the CE4 network element 176) and a label TLV that specifies the label component of the label mapping. In another embodiment BGP is used to carry the application label. The application label advertisement traverses through the core network element(s) 125 and will be received by the edge network element 105A.

At operation 13, the control module(s) 120A install the PTM application label in one or more of its forwarding structures (e.g., in its FTN structure). Since the edge network element 105A knows the tunneling model type of the LSP, it can map the application with the appropriate LSP. At operation 14, the control module(s) 120A associate the PTM application label with the LDP LSP 135. By way of a specific example, the control module(s) 120A configures its forwarding structure(s) such that upon receiving a packet from the CE2 network element 172 that is destined to the CE4 network element 176, the PTM application label is placed on the label stack and the PTM tunnel label is stacked over the PTM application label. For example, the next hop of the NHLFE entry for the PTM application label points to the NHLFE entry for the PTM tunnel label.

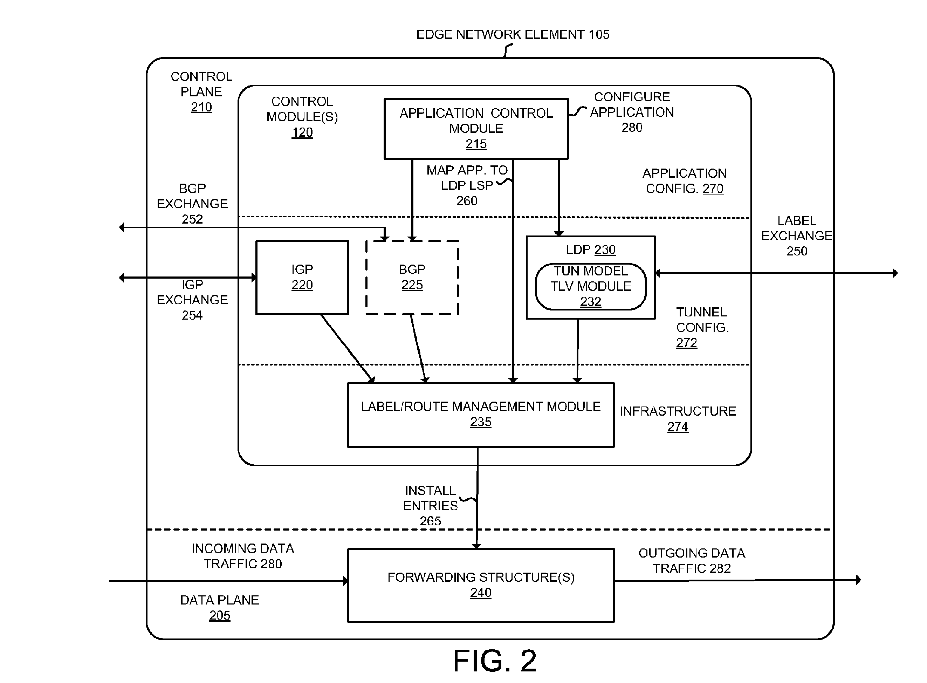

Figure 2 is a block diagram illustrating an exemplary architecture of an edge network element 105 according to one embodiment. The architecture illustrated in Figure 2 can be applied to an ingress network element and an egress network element.

As illustrated in Figure 2, the edge network element 105 is separated into the data plane 205 and the control plane 210. The control plane 210 generally determines how packets are to be forwarded and the data plane 205 is generally in charge of forwarding the packets. The control plane 210 includes the control module(s) 120, which are separated into an application configuration layer 270, a tunnel configuration layer 272, and an infrastructure layer 274.

Generally, the application configuration layer 270 configures the applications that require particular types of tunneling models. For example, the application control module 215 may include an interface to allow a network administrator (or other user) to configure application settings. The application control module 215 also maps 260 an application that requires a particular tunneling model for its transport LSP with an LSP that is used for that particular tunneling model.

The tunnel configuration layer 272 includes a number of routing protocols including the IGP module 220 and the BGP module 225 (which is optional) and the LDP module 230. In general, the tunnel configuration layer 272 determines the path of the LDP LSPs through the IGP module 220 and performs label exchange procedure through the LDP module 230 and optionally the BGP module 225. The IGP module 220 performs an IGP exchange procedure 254 to exchange routing information with other network elements in the same autonomous system. The LDP module 230 typically uses the shortest path as determined by the IGP module 220 when establishing the LSP. The BGP module 225 exchanges routing information with other network elements using a BGP exchange procedure 252. In one embodiment, the BGP module 225 is used to carry the application labels. The LDP module 230 performs the label exchange procedure 250 when establishing LSPs. The LDP module 230 includes the tunneling model TLV module 232, which generates the tunneling model TLVs that are included in the label mapping messages and processes received tunneling model TLVs.

The IGP module 220, the BGP module 225, and the LDP module 230 install label or route entries into the infrastructure layer 274 of the control plane 210. For example, the IGP module 220, the BGP module 225, and the LDP module 230 send their selected routes or paths to the label/route management module 235. The label/route management module 235, which may manage a main RIB (Routing Information Base) on the control plane selects certain routes and labels from the routes downloaded by the IGP module 220, the BGP module 225, and the LDP module 230 to install 265 into the forwarding structure(s) 240 of the data plane 205. By way of example, the forwarding structure(s) 240 may include an IP forwarding information base (FIB), a NHLFE structure, a FTN structure, and an ILM structure. If the edge network element 105 acts only as an ingress network element in an MPLS network (not also an egress network element in an MPLS network), the forwarding structure(s) 240 may not include an ILM structure.

Incoming data traffic 280 is received at the data plane 205. In one embodiment, the data plane includes a set of one or more forwarding cards that each include a memory (e.g., to store the forwarding structure(s) 240) and a processing entity to forward the traffic. By way of example, based on the incoming data traffic 280 the destination is determined (e.g., through use of the forwarding structure(s) 240) and sent towards the destination as outgoing data traffic 282. By way of a specific example, if the edge network element 105 is acting as an ingress network element in an MPLS network, the incoming data traffic 280 may be unlabeled traffic and the outgoing data traffic 282 may be labeled traffic.

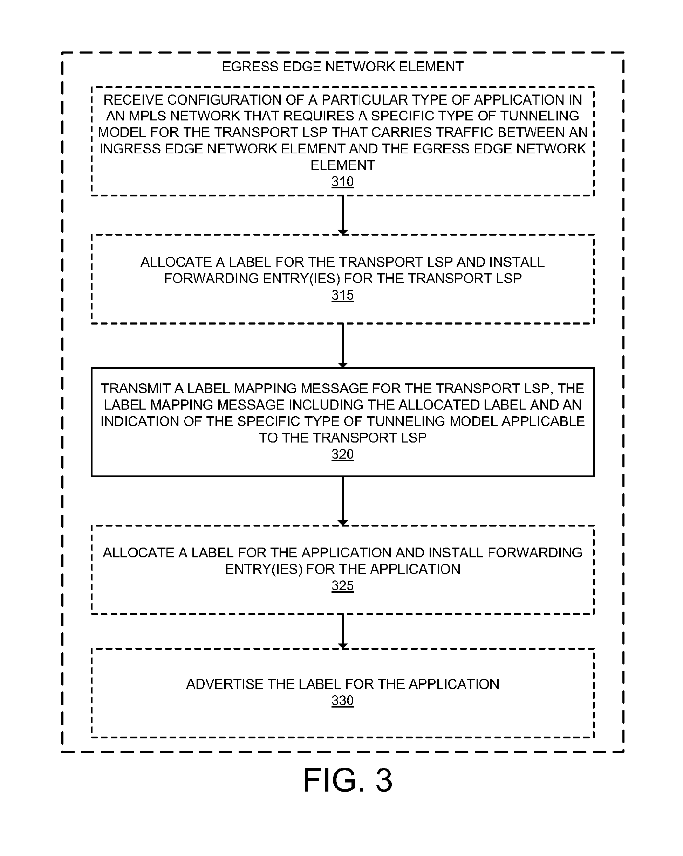

Figure 3 is a flow diagram illustrating exemplary operations performed on an egress edge network element for signaling an LSP tunneling model according to one embodiment. The operations of Figure 3 will be described with reference to the exemplary embodiment of Figure 2. However, it should be understood that the operations of Figure 3 can be performed by embodiments of the invention other than those discussed with reference to Figure 2, and the embodiments discussed with reference to Figure 2 can perform operations different than those discussed with reference to Figure 3.

At operation 310, the egress edge network element 105, via the application control module 215, receives configuration of a particular type of application in an MPLS network that requires a specific type of tunneling model for the transport LSP that carries traffic between an ingress edge network element and the egress edge network element. By way of example, the configuration can be for an application that requires a uniform tunneling model in its transport LSP (e.g., BGP free core) or a pipe tunneling model (either regular pipe or short-pipe) in its transport LSP (e.g., L2VPN or other pseudowire application). Configuring the application may include configuring the connections to the edge network element 105. For example, in the case of an L2VPN application, the configuration may include configuring a pseudowire for the core facing side of the application and an attachment circuit for the customer facing side of the application.

The configuration may also include the FEC that is to be associated with each different transport LSP for the application. The FEC will be mapped to the label that is allocated for the transport LSP. In one embodiment a separate FEC is used for each different transport LSP, while in another embodiment a single FEC is used for multiple different transport LSPs (each having a different label). Sharing a single FEC among multiple different transport LSPs reduces the burden of configuring multiple FECs.

Flow moves from operation 310 to operation 315 where the egress edge network element 105, via the LDP module 230, allocates a label for the transport LSP and causes the installation of one or more forwarding entries for the transport LSP. For example, the application control module 215 triggers the LDP module 230 to allocate a label for the transport LSP of the application and indicates to the LDP module 230 the type of tunneling model applicable to that transport LSP. The LDP module 230 (or alternatively the application control module 215) may also cause an indication of the tunneling model type that is applicable for that transport LSP to be installed in the label/route management module which in turn installs it into the forwarding structure(s) 240. The LDP module 230 also generates an indication of the tunneling model type that is applicable for the transport LSP.

Flow then moves to operation 320 where the egress edge network element 105, via the LDP module 230, transmits a label mapping message for the transport LSP. The label mapping message includes a mapping of the allocated label and the FEC and also includes the indication of the tunneling model type that is applicable for the transport LSP. By way of a specific example, the label mapping message includes a FEC TLV that specifies the FEC component of the label mapping, a label TLV that specifies the label component of the label mapping, and a tunnel model TLV that specifies the tunneling model applicable for the resulting LSP.

Flow then moves to operation 325 where the egress edge network element 105, via the LDP module 230 or the BGP module 230, allocates a label for the application and causes the installation of one or more forwarding entries for the application that map the label and a FEC (the FEC corresponds with an external network element (e.g., the CE3 network element 174)). The application label mapping is used by the egress edge network element 105 to forward the packet out the appropriate egress interface. For example, although Figure 1 illustrates a single access circuit 186 connected to a single CE network element 176 corresponding to the pipe tunneling model application 115B, there may be multiple customer edge network elements each connected to the edge network element 105B with a separate access circuit. The application label mapping allows the egress edge network element to properly determine how to forward the packet.

Flow then moves to operation 330 where the egress edge network element 105 advertises the application label mapping. In one embodiment the egress edge network element 105 uses the LDP module 230 to transmit a label mapping message that includes maps the application label with a FEC TLV that specifies the FEC component of the label mapping and a label TLV that specifies the label component of the label mapping. In another embodiment, the BGP module 225 is used to carry the label mapping.

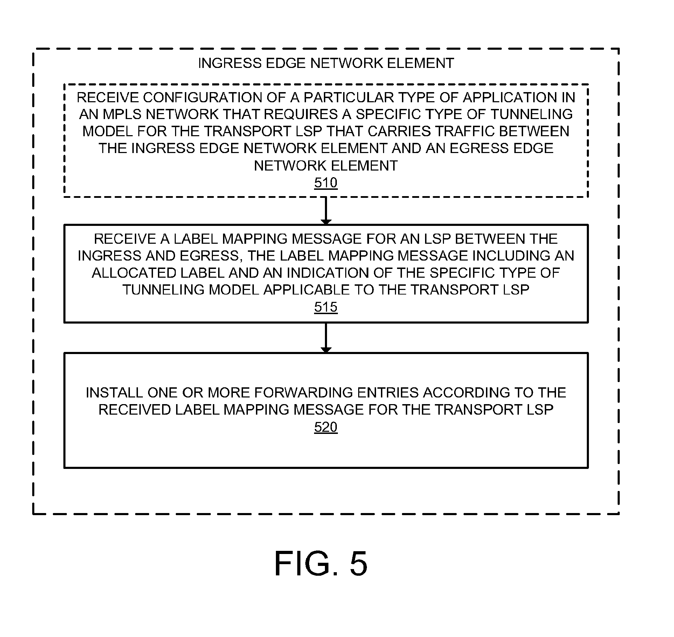

Figure 5 is a flow diagram illustrating exemplary operations performed on an ingress edge network element for processing a label mapping message that includes an indication of a tunneling model applicable for the LSP according to one embodiment. The operations of Figure 5 will be described with reference to the exemplary embodiment of Figure 2. However, it should be understood that the operations of Figure 5 can be performed by embodiments of the invention other than those discussed with reference to Figure 2, and the embodiments discussed with reference to Figure 2 can perform operations different than those discussed with reference to Figure 5.

At operation 510, the ingress edge network element 105, via the application control module 215, receives configuration of a particular type of application in an MPLS network that requires a specific type of tunneling model for the transport LSP that carries traffic between the ingress edge network element and an egress edge network element. By way of example, the configuration can be for an application that requires a uniform tunneling model in its transport LSP (e.g., BGP free core) or a pipe tunneling model (either regular pipe or short-pipe) in its transport LSP (e.g., L2VPN or other pseudowire application). Configuring the application may include configuring the connections to the edge network element 105. For example, in the case of an L2VPN application, the configuration may include configuring a pseudowire for the core facing side of the application and an attachment circuit for the customer facing side of the application.

Flow moves from operation 510 to operation 515 where the ingress edge network element 105 receives a label mapping message for an LSP between the ingress edge network element and an egress edge network element. The label mapping message includes an indication of the specific tunneling model type that is supported on that LSP. By way of a specific example, the LDP module 230 receives and processes the label mapping message, which includes a tunnel label TLV that specifies the tunneling model applicable for that LSP. Flow then moves to operation 520.

At operation 520, the ingress edge network element 105 installs one or more forwarding entries according to the label mapping received in operation 515. For example, the LDP module 230 causes an entry to be installed in a NHLFE forwarding structure of the data plane 205. The LDP module also stores or provides to the application control module 215 an indication of the tunneling model type for the LSP corresponding to the label mapping received. It should be understood that the operations of Figure 5 may be repeated and multiple different LSPs that are established between the ingress edge network element and the egress edge network element that may each have a different applicable tunneling model type.

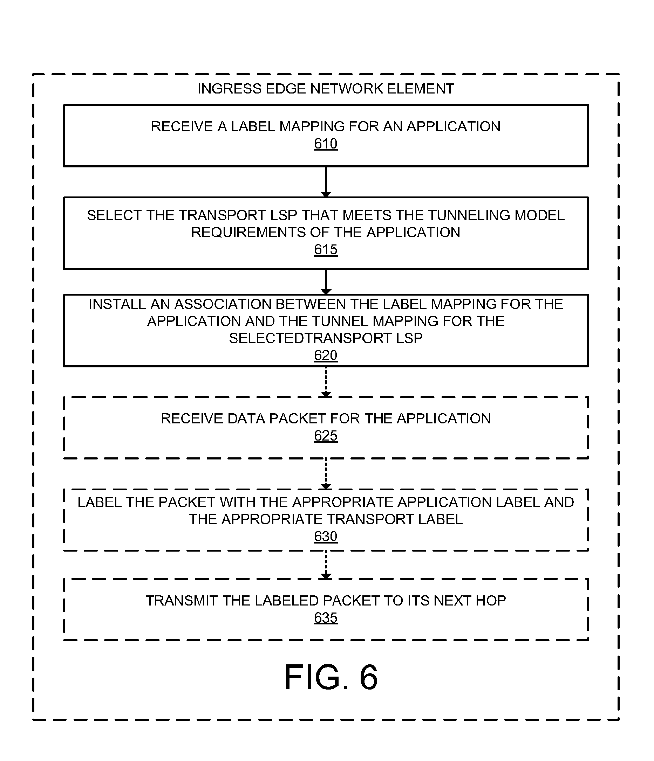

Figure 6 is a flow diagram illustrating exemplary operations performed on an ingress edge network element for mapping an application with a LSP based on the tunneling requirements of that application according to one embodiment. The operations of Figure 6 will be described with reference to the exemplary embodiment of Figure 2. However, it should be understood that the operations of Figure 6 can be performed by embodiments of the invention other than those discussed with reference to Figure 2, and the embodiments discussed with reference to Figure 2 can perform operations different than those discussed with reference to Figure 6.

At operation 610, the ingress edge network element 105 receives a label mapping for an application in the MPLS network. This label mapping may be received by the LDP module 230 (if the label mapping message is transmitted using LDP) or by the BGP module (if the label mapping is carried by BGP). By way of a specific example, the label mapping for the application is received as a result of a targeted LDP session established between the egress edge network element and the ingress edge network element. Flow then moves to operation 615.

Since there may be multiple transport LSPs established, at operation 615, the ingress edge network element 105 selects a transport LSP that meets the tunneling model requirements of the application. For example, the application control module 215 accesses the stored indication of the tunneling model for the LSPs (the indication may be stored in an entry for the outgoing transport label of the transport LSP in a structure managed by the label/route management module 235) to determine which transport LSP meets the tunneling model requirements of the application.

If no transport LSP exists that meets the requirements of the application, then alternative action is taken. For example, in one embodiment the tunnel configuration is independent of the applications configured and the ingress network element establishes an LDP session with the egress etwork element to trigger the label exchange. In another embodiment, if the LDP LSP tunnel is to be established as result of the configuration of the application, then the ingress network element triggers a new label binding for that tunnel with the egress network element. Flow moves from operation 615 to operation 620.

At operation 620, the ingress edge network element 105 installs an association between the label mapping for the application and the tunnel mapping for the transport LSP that meets the tunneling model requirements of the application. For example, the application control module 215 causes the application label mapping and the selected LSP tunnel mapping to be associated (e.g., in the forwarding structure(s) 240) such that upon receiving a packet that is destined to the FEC associated with the application label mapping, the application label is placed on the label stack and the selected tunnel label is stacked over the application label.

Flow then moves to operation 630 where the ingress edge network element 105 receives a data packet for the application. For example, the data plane 205 receives a data packet at an interface or access circuit associated with a particular application. Next, based on the destination address of the packet, the ingress edge network element 105 labels the packet with the appropriate application label and the appropriate transport label at operation 630 (e.g., using the entries installed in the forwarding structure(s) 240). The ingress edge network element 105 then transmits the labeled packet to its next hop at operation 635.

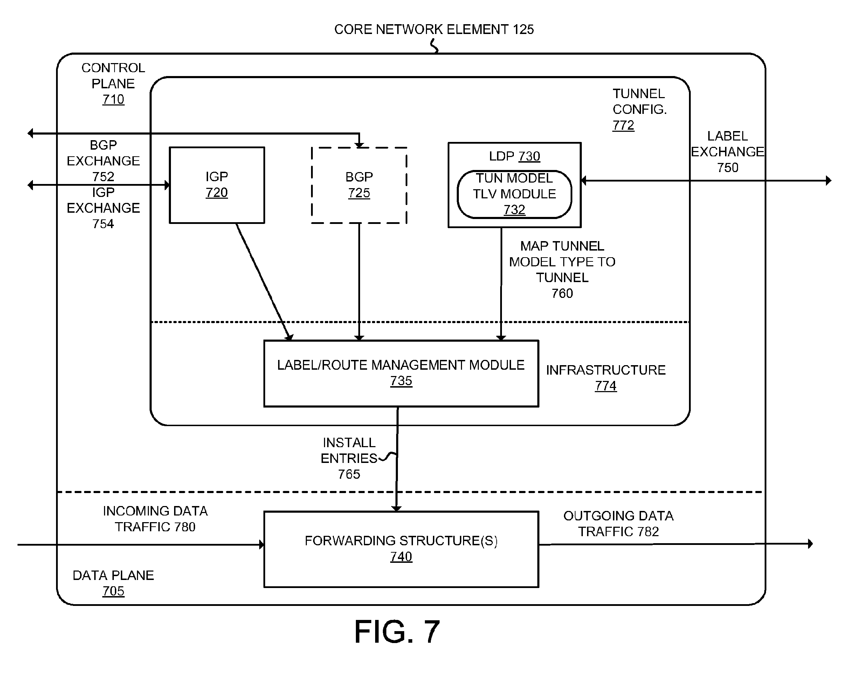

Figure 7 is a block diagram illustrating an exemplary architecture of a core network element 125 according to one embodiment. The architecture of the core network element 125 is similar to the architecture edge network element with the exception that the core network element does not include an application configuration layer. As illustrated in Figure 7, the core network element 125 includes the data plane 705 and the control plane 710. The control plane 710 includes the tunnel configuration layer 772 and the infrastructure layer 774. The tunnel configuration layer 772 includes the IGP module 720, the BGP module 725 (which is optional), and the LDP module 730. In general, the tunnel configuration layer 727 determines the path of the LDP LSPs through the IGP module 720 and performs label exchange procedure through the LDP module 730 and optionally the BGP module 725. The IGP module 720 performs an IGP exchange procedure 754 to exchange IGP routing information with other network elements in the same autonomous system. The LDP module 730 typically uses the shortest path as determined by the IGP module 720 when establishing the path of the LSP. The BGP module 725 exchanges routing information with other network elements using a BGP exchange procedure 752. In one embodiment, the BGP module 725 is used to carry the application labels.

The LDP module 730 performs the label exchange procedure 750 when establishing paths for LSPs. For example, the LDP module 730 receives an LDP label mapping message from a downstream LSR for a particular FEC. The LDP module 730 allocates and advertises its own label for the FEC to an upstream LSR. The LDP module 230 includes the tunneling model TLV module 232 to process tunneling model TLVs received from downstream LSRs. The core network element 125 may operate only in transit mode or may, in some circumstances, operate in PHP mode. If operating only as a transit network element (not performing PHP), the core network element 125 allocates and advertises a label for the FEC and propagates the same tunneling model indication (e.g., the same tunnel model TLV) received from their downstream LSR. If operating in PHP mode, the core network element 125 installs one or more forwarding entries for the transport LSP such that the tunnel label will be popped and the tunneling model that is applicable for the LSP will be applied.

The IGP module 720, the BGP module 725, and the LDP module 730 install label or route entries into the infrastructure layer 774 of the control plane 710. For example, the IGP module 720, the BGP module 725, and the LDP module 730 send their selected routes or paths to the label/route management module 735. The label/route management module 735, which may manage a main RIB (Routing Information Base) on the control plane selects certain routes and labels from the routes downloaded by the IGP module 720, the BGP module 725, and the LDP module 730 to install 765 into the forwarding structure(s) 740 of the data plane 705. By way of example, the forwarding structure(s) 740 may include an IP forwarding information base (FIB), a NHLFE structure and an ILM structure.

Incoming data traffic 780 is received at the data plane 705. The incoming data traffic 780 is typically labeled packets that each include at least a tunnel label stacked over an application label. In one embodiment, the data plane 705 includes a set of one or more forwarding cards that each include a memory (e.g., to store the forwarding structure(s) 740) and a processing entity to forward the traffic. If the core network element 125 is not operating in PHP mode, then based on the incoming label, the core network element 125 swaps the outer label according to the forwarding structure(s) 740 and forwards the labeled packet to its next hop. If the core network element 125 is operating in PHP mode, then based on the incoming label, the core network element 125 pops the outer label and applies the applicable tunneling model processing for that LSP (e.g., as indicated in the forwarding structure(s) 740) and sends the packet (the packet will still have the application label) to its next hop.

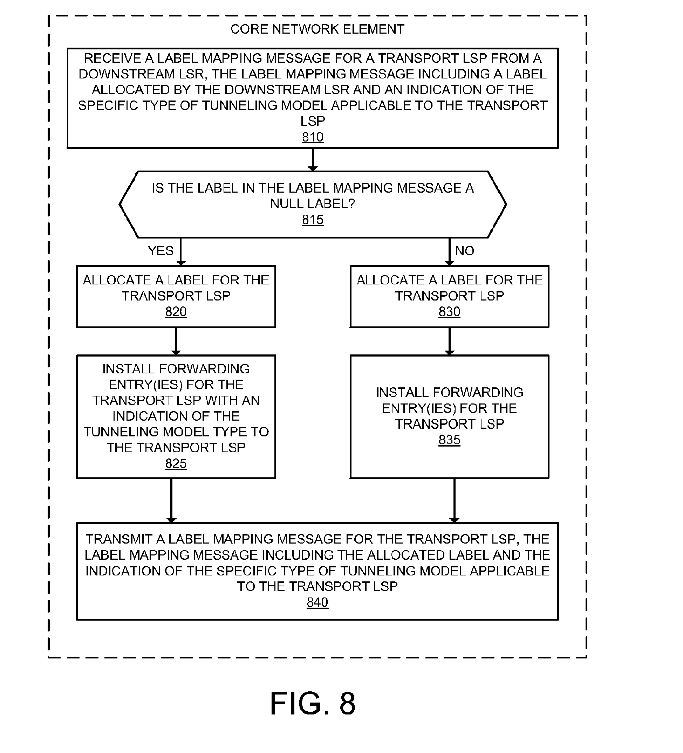

Figure 8 is a flow diagram illustrating exemplary operations performed on a core network element for processing label mapping messages with an indication of the LSP tunneling model according to one embodiment. The operations of Figure 8 will be described with reference to the exemplary embodiment of Figure 7. However, it should be understood that the operations of Figure 8 can be performed by embodiments of the invention other than those discussed with reference to Figure 7, and the embodiments discussed with reference to Figure 7 can perform operations different than those discussed with reference to Figure 8.

At operation 810, the core network element 125 receives a label mapping message for a transport LSP from a downstream LSR. The downstream LSR may be another core network element or may be the egress edge network element. The label mapping message includes a label allocated by the downstream LSR mapped to a FEC, and further includes an indication of the specific type of tunneling model that is applicable to the transport LSP. By way of a specific example, the LDP module 730 receives a label mapping message that includes a FEC TLV that specifies the FEC component of the label mapping, a label TLV that specifies the label component of the label mapping, and a tunnel model TLV that specifies the applicable tunneling model. Flow then moves to operation 815.

At operation 815, the core network element 125 determines whether the label in the label mapping message is an implicit NULL label. If the label is an implicit NULL label, then the core network element 125 is to perform penultimate hop-popping. If the label is an implicit NULL label, then flow moves to operation 820, otherwise flow moves to operation 830.

At operation 820, the core network element 125 allocates a label for the transport LSP. Flow then moves to operation 825 and the core network element 125 installs one or more forwarding entries (e.g., in its ILM) including an indication of the tunneling model type of the transport LSP. The one or more forwarding entries are configured such that upon receiving a labeled packet with the allocated label from an upstream LSR, the core network element 125 pops the allocated label, applies the applicable tunneling model processing, and forwards the packet to its next hop. Next, at operation 840, the core network element 125 transmits a label mapping message for the transport LSP that includes the label mapping between its allocated label and the FEC and further includes the indication of the specific type of tunneling model that is applicable for the LSP.

At operation 830 (the core network element 125 is not operating in PHP mode), the core network element 125 allocates a label for the transport LSP. Flow then moves to operation 835 and the core network element 126 installs one or more forwarding entries (e.g., in its ILM). The one or more forwarding entries are configured such that upon receiving a labeled packet with the allocated label from an upstream LSR, the core network element 125 swaps the allocated label with the label included in the label mapping message received in operation 810 and forwarded to its next hop. Next, at operation 840, the core network element 125 transmits a label mapping message for the transport LSP that includes the label mapping between its allocated label and the FEC and further includes the indication of the specific type of tunneling model that is applicable for the LSP.

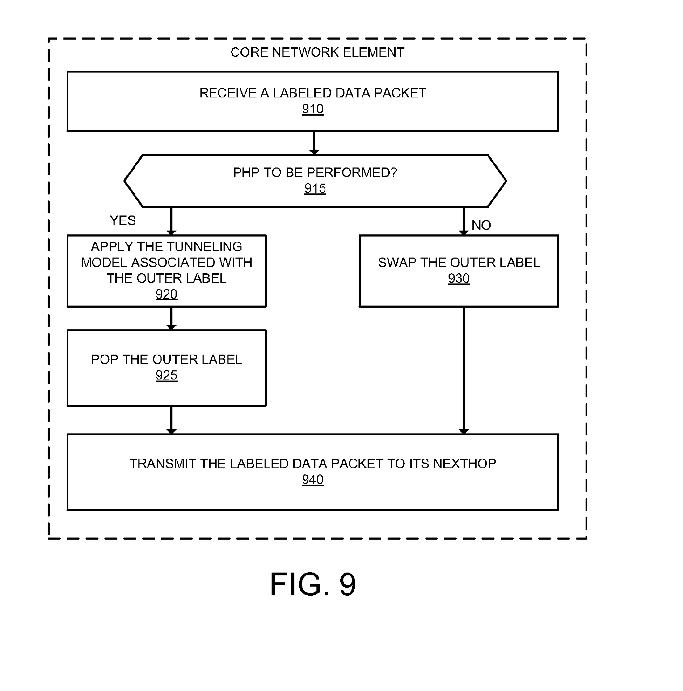

Figure 9 is a flow diagram illustrating exemplary operations performed on a core network element for processing labeled packets according to one embodiment. The operations of Figure 9 will be described with reference to the exemplary embodiment of Figure 7. However, it should be understood that the operations of Figure 9 can be performed by embodiments of the invention other than those discussed with reference to Figure 7, and the embodiments discussed with reference to Figure 7 can perform operations different than those discussed with reference to Figure 9.

At operation 910, the core network element 125 receives a labeled data packet. The core network element 125 uses its forwarding structure(s) 740 when processing the labeled data packet based on the outer label of the packet. Next, at operation 915, if PHP is to be performed (e.g., the forwarding structure(s) 740 indicate a label pop instead of a label swap), then flow moves to operation 920, otherwise flow moves to operation 930. At operation 930, the core network element 125 swaps the outer label of the packet according to its forwarding structure(s) 740 and flow moves to operation 940 where the labeled packet is transmitted to its next hop.

At operation 920, the core network element 125 applies the tunneling model processing applicable that is associated with the outer label. Next, at operation 925, the core network element 125 pops the outer label. It should also be understood that the tunneling model processing may also be at least partially performed after the outer label is popped from the label stack. Flow then moves to operation 940 where the labeled packet is transmitted to its next hop.

While embodiments have been described herein with respect to signaling an LSP tunneling model that can be used by a particular application, in some embodiments the tunneling model signaling is used for particular types of processing (e.g., DiffServ processing, TTL processing). For example, DiffServ processing may be configured to use a particular type of tunneling model and TTL processing may be configured to use a different type of tunneling model.

As described herein, operations may be performed by specific configurations of hardware such as application specific integrated circuits (ASICs) or be stored in memory embodied in a non-transitory machine readable medium. Thus, the techniques shown in the figures can be implemented using code and data stored and executed on one or more electronic devices (e.g., a network element). Such electronic devices store and communicate (internally and/or with other electronic devices over a network) code and data using machine-readable media, such as non-transitory machine-readable storage media (e.g., magnetic disks; optical disks; random access memory; read only memory; flash memory devices; phase-change memory) and transitory machine-readable communication media (e.g., electrical, optical, acoustical or other form of propagated signals - such as carrier waves, infrared signals, digital signals). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). Thus, the storage device of a given electronic device typically stores code and/or data for execution on the set of one or more processors of that electronic device. Of course, one or more parts of an embodiment of the invention may be implemented using different combinations of software, firmware, and/or hardware.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

## Claims

1. A method for a network element that is acting as an egress network element in a Multiprotocol Label Switching, MPLS; network for signaling a plurality of label switched paths, LSPs, for a plurality of disparate applications provided in the MPLS network that each require a different type of tunneling model respectively, the method comprising the steps of:
transmitting a first label mapping message for a first one of the plurality of LSPs, the first label mapping message including an indication of a first tunneling model type applicable for the first LSP, wherein the first LSP is to be used to transport traffic in the MPLS network of a first one of the plurality of disparate applications that requires the indicated first tunneling model type; and
transmitting a second label mapping message for a second one of the plurality of LSPs, the second label mapping message including an indication of a second tunneling model type applicable for the second LSP, wherein the second LSP is to be used to transport traffic in the MPLS network of a second one of the plurality of disparate applications that requires the indicated second tunneling model type, wherein the first tunneling model type and the second tunneling model type are different; and wherein the first and second label mapping messages are transmitted to the next upstream Label Switching Router , LSR, on the first and second LSPs respectively.

2. The method of claim 1, wherein the first label mapping message further includes a mapping between a first label and a Forwarding Equivalence Class , FEC, and wherein the second label mapping message further includes a mapping between a second label and the FEC.

3. The method of claim 1, wherein the first label mapping message further includes a mapping between a first label and a first Forwarding Equivalence Class (FEC), and wherein the second label mapping message further includes a mapping between a second label and a second FEC, wherein the first FEC is different than the second FEC.

4. The method of claim 1, wherein the first tunneling model type is a uniform model that makes each network element that the first LSP traverses visible to a network element that is external to the first LSP, and wherein the second tunneling model type is one of a pipe model and a short-pipe model that causes only an ingress network element and the egress network element to be visible to a network element that is external to the second LSP.

5. The method of claim 4, wherein the first label mapping message further includes a mapping between a first label and a Forwarding Equivalence Class, wherein the first label is a null label that causes a network element directly upstream from the egress network element to operate in penultimate hop popping mode.

6. A network element configured to act as an egress network element in a Multiprotocol Label Switching, MPLS, network, the network element comprising:
one or more cards each including a set of one or more processors that are coupled a non-transitory machine-readable storage medium having stored therein,
an application control module adapted to configure a plurality of disparate applications for use in the MPLS network, wherein each application requires a different type of tunneling model; and
a Label Distribution Protocol , LDP, module adapted to,
transmit a label mapping message to signal a different label switched path, LSP, for each of the configured applications, wherein each label mapping message includes an indication of a tunneling model type applicable to that LSP; and wherein teach label mapping message is transmitted to the next upstream Label Switching Router, LSR, on the respective LSP.

7. The network element of claim 6, wherein each label mapping message that the LDP module is adapted to transmit to signal the LSP for each of the configured applications includes a mapping between a different label and a same Forwarding Equivalence Class.

8. The network element of claim 6, wherein each label mapping message that the LDP module is adapted to transmit to signal the LSP for each of the configured applications includes a mapping between a different label and a different Forwarding Equivalence Class.

9. The network element of claim 6, wherein a first one of the plurality of disparate applications requires a uniform tunneling model type, and wherein a second one of the plurality of disparate application require a pipe tunneling model type or a short-pipe tunneling model type.

10. A method for a network element that is acting as an ingress network element in a Multiprotocol Label Switching, MPLS, network and is participating in a plurality of disparate applications provided in the MPLS network that each require a different type of tunneling model, the method comprising the steps of:
receiving a first label mapping message for a first label switched path , LSP, between the ingress network element and an egress network element, the first label mapping message including an indication of a first tunneling model type that is supported on the first LSP;
installing one or more forwarding entries according to the received first label mapping message;
receiving a second label mapping message for a second LSP between the ingress network element and the egress network element, the second label mapping message including an indication of a second tunneling model type that is supported on the second LSP;
installing one or more forwarding entries according to the received second label mapping message; and
associating a first one of the plurality of disparate applications that requires the first tunneling model with the first LSP; and
associating a second one of the plurality of disparate applications that requires the second tunneling module with the second LSP;
wherein the first and second label mapping messages are transmitted by the egress network element of the respective LSP and are received from an upstream Label Switching Router, LSR, on the respective LSP.

11. The method of claim 10, wherein the first tunneling model type is a uniform tunneling model that makes each network element that the first LSP traverses to be visible to a network element that is external to the first LSP, and wherein the second tunneling model type is one of a pipe tunneling model and a short-pipe tunneling model that causes only the ingress network element and an egress network element to be visible to a network element that is external to the second LSP.

12. The method of claim 10, wherein the first label mapping message further includes a mapping between a first label and a Forwarding Equivalence Class , FEC, and wherein the second label mapping message further includes a mapping between a second label and the FEC.

13. The method of claim 10, wherein the first label mapping message further includes a mapping between a first label and a first Forwarding Equivalence Class , and wherein the second label mapping message further includes a mapping between a second label and a second FEC, wherein the first FEC is different than the second FEC.

14. A network element configured to act as an ingress network element in a Multiprotocol Label Switching, MPLS, network, the network element comprising:
one or more cards each including a set of one or more processors that are coupled a non-transitory machine-readable storage medium having stored therein,
a Label Distribution Protocol, LDP, module adapted to,
receive a label mapping message for each a plurality of different label switched paths, LSPs, for use in the MPLS network respectively, wherein the LSPs are to span between the ingress network element and an egress network element, and wherein each label mapping message includes an indication of a tunneling model type applicable to that LSP; and wherein each label mapping message is transmitted by the egress network element of the respective LSP and is received from an upstream Label Switching Router, LSR, on the respective LSP; and
an application control module adapted to,
configure a plurality of disparate applications for use in the MPLS network, wherein each application requires a different type of tunneling model, and
for each of the plurality of applications, associate that application with one of the plurality of LSPs based on the type of tunneling model required for that application and the tunneling model type supported by that LSP.

15. The network element of claim 14, wherein a first one of the plurality of applications requires a uniform tunneling model, and wherein a second one of the plurality of applications requires a pipe tunneling model or a short-pipe tunneling model.

16. The network element of claim 14, wherein each label mapping message indicates a mapping between a different label and a same Forwarding Equivalence Class, FEC.

17. The network element of claim 14, wherein each label mapping message indicates a mapping between a different label and a different Forwarding Equivalence Class.

## Patentansprüche

1. Ein Verfahren für ein Netzwerkelement, welches als ein Ausgangsnetzwerkelement in einem Multiprotokoll-Label-Switching, MPLS,-Netzwerk zum Signalisieren einer Vielzahl von Label-geschalteter Pfade (Label-Switched-Paths), LSPs, für eine Vielzahl von in dem MPLS-Netzwerk vorgesehener disparater Anwendungen, welche entsprechend jeweils einen unterschiedlichen Typ eines Tunnelmodells erfordern, agiert, wobei das Verfahren die Schritte umfasst:
Übermitteln einer ersten Label-Mapping-Nachricht für eine Erste der Vielzahl von LSPs, wobei die erste Label-Mapping-Nachricht eine Angabe eines für den ersten LSP anwendbaren ersten Tunnelmodelltyps umfasst, wobei der erste LSP zum Transportieren von Verkehr in dem MPLS-Netzwerk einer Ersten der Vielzahl von disparaten Anwendungen, welche den angegebenen ersten Tunnelmodelltyp erfordern, zu verwenden ist; und
Übermitteln einer zweiten Label-Mapping-Nachricht für eine Zweite der Vielzahl von LSPs, wobei die zweite Label-Mapping-Nachricht eine Angabe eines für den zweiten LSP anwendbaren zweiten Tunnelmodelltyps umfasst, wobei der zweite LSP zum Transportieren von Verkehr in dem MPLS-Netzwerk einer Zweiten der Vielzahl von disparaten Anwendungen, welche den angegebenen zweiten Tunnelmodelltyp erfordern, anzuwenden ist, wobei der erste Tunnelmodelltyp und der zweite Tunnelmodelltyp unterschiedlich sind; und wobei die ersten und zweiten Label-Mapping-Nachrichten zu dem nächsten vorgelagerten Label-Switching-Router, LSR, entsprechend auf den ersten und zweiten LSPs übermittelt werden.

2. Das Verfahren aus Anspruch 1, wobei die erste Label-Mapping-Nachricht weiter ein Mapping zwischen einem ersten Label und einer Weiterleitungs-Äquivalenzklasse (Forwarding Equivalence Class), FEC, umfasst
und wobei die zweite Label-Mapping-Nachricht weiter ein Mapping zwischen einem zweiten Label und der FEC umfasst.

3. Das Verfahren aus Anspruch 1, wobei die erste Label-Mapping-Nachricht weiter ein Mapping zwischen einem ersten Label und einer ersten Weiterleitungs-Äquivalenzklasse (Forwarding Equivalence Class - FEC) umfasst und wobei die zweite Label-Mapping-Nachricht weiter ein Mapping zwischen einem zweiten Label und einer zweiten FEC umfasst, wobei das erste FEC sich von dem zweiten FEC unterscheidet.

4. Das Verfahren aus Anspruch 1, wobei der erste Tunnelmodelltyp ein uniformes Modell ist, welches jedes Netzwerkelement, welches das erste LSP durchläuft, für ein Netzwerkelement, welches außerhalb des ersten LSP ist, sichtbar macht, und wobei der zweite Tunnelmodelltyp eines von einem Leitungsmodell und einem Kurzleitungsmodell ist, welches nur ein Eingangsnetzwerkelement und das Ausgangsnetzwerkelement veranlasst für ein Netzwerkelement, welches außerhalb des zweiten LSP ist, sichtbar zu sein.

5. Das Verfahren aus Anspruch 4, wobei die erste Label-Mapping-Nachricht weiter ein Mapping zwischen einem ersten Label und einer Weiterleitungs-Äquivalenzklasse (Forwarding Equivalence Class) umfasst, wobei das erste Label ein Nulllabel ist, welches ein dem Ausgangsnetzwerkelement direkt vorgelagertes Netzwerkelement dazu veranlasst in einem Penultimate-Hop-Popping-Modus zu operieren.

6. Ein Netzwerkelement, konfiguriert zum Agieren als ein Ausgangsnetzwerkelement in einem Multiprotokoll-Label-Switching, MPLS,-Netzwerk, wobei das Netzwerkelement umfasst:
eine oder mehrere Karten, welche jeweils einen Satz von einem oder von mehreren Prozessoren umfasst, welche mit einem nicht flüchtigen maschinenlesbaren Speichermedium verknüpft sind, welches darauf gespeichert hat,
ein Anwendungssteuermodul, welches zum Konfigurieren einer Vielzahl von disparaten Anwendungen zur Verwendung in dem MPLS-Netzwerk angepasst ist, wobei jede Anwendung einen unterschiedlichen Typ eines Tunnelmodells erfordert; und
ein Label-Distribution-Protokoll, LDP,-Modul, welches angepasst ist zum
Übermitteln einer Label-Mapping-Nachricht zum signalisieren eines unterschiedlichen Label-geschalteten Pfads (Label-Switched-Path), LSP, für jede der konfigurierten Anwendungen, wobei jede Label-Mapping-Nachricht eine Angabe eines für diesen LSP anwendbaren Tunnelmodelltyps umfasst; und wobei jede Label-Mapping-Nachricht zu dem nächsten vorgelagerten Label-Switching-Router, LSR, auf dem entsprechenden LSP übermittelt wird.

7. Das Netzwerkelement aus Anspruch 6, wobei jede Label-Mapping-Nachricht, für welche das LDP-Modul zum Übermitteln zum Signalisieren des LSP für jede der konfigurierten Anwendungen angepasst ist, ein Mapping zwischen einem unterschiedlichen Label und einer identischen Weiterleitungs-Äquivalenzklasse (Forwarding Equivalence Class) umfasst.

8. Das Netzwerkelement aus Anspruch 6, wobei jede Label-Mapping-Nachricht, für welche das LDP-Modul zum Übermitteln zum Signalisieren des LSP für jede der konfigurierten Anwendungen angepasst ist, ein Mapping zwischen einem unterschiedlichen Label und einer unterschiedlichen Weiterleitungs-Äquivalenzklasse (Forwarding Equivalence Class) umfasst.

9. Das Netzwerkelement aus Anspruch 6, wobei eine Erste der Vielzahl von disparaten Anwendungen einen uniformen Tunnelmodelltyp erfordert, und wobei eine Zweite der Vielzahl von disparaten Anwendungen einen Leitungstunnelmodelltyp oder einen Kurzleitungstunnelmodelltyp erfordert.

10. Ein Verfahren für ein Netzwerkelement, welches als ein Eingangsnetzwerkelement in einem Multiprotokoll-Label-Switching, MPLS,-Netzwerk agiert und an einer Vielzahl von in dem MPLS-Netzwerk vorgesehenen disparaten Anwendungen, welche jeweils einen unterschiedlichen Typ eines Tunnelmodells erfordern, teilnimmt, wobei das Verfahren die Schritte umfasst:
Empfangen einer ersten Label-Mapping-Nachricht für einen ersten Label-geschalteten Pfad (Label Switched Path), LSP, zwischen dem Eingangsnetzwerkelement und einem Ausgangsnetzwerkelement, wobei die erste Label-Mapping-Nachricht eine Angabe eines ersten Tunnelmodelltyps, welcher auf dem ersten LSP unterstützt wird, umfasst;
Installieren von einem oder von mehreren Weiterleitungseinträgen gemäß der empfangenen ersten Label-Mapping-Nachricht;
Empfangen einer zweiten Label-Mapping-Nachricht für einen zweiten LSP zwischen dem Eingangsnetzwerkelement und dem Ausgangsnetzwerkelement, wobei die zweite Label-Mapping-Nachricht eine Angabe eines zweiten Tunnelmodelltyps, welcher auf dem zweiten LSP unterstützt wird, umfasst;
Installieren von einem oder von mehreren Weiterleitungseinträgen gemäß der empfangenen zweiten Label-Mapping-Nachricht; und
Verknüpfen einer Ersten von der Vielzahl von disparaten Anwendungen, welche das erste Tunnelmodell erfordern, mit dem ersten LSP; und
Verknüpfen einer Zweiten der Vielzahl von disparaten Anwendungen, welche das zweite Tunnelmodul erfordern, mit dem zweiten LSP;
wobei die ersten und zweiten Label-Mapping-Nachrichten durch das Ausgangsnetzwerkelement des entsprechenden LSP übermittelt werden und von einem vorgelagerten Label-Switching-Router, LSR, auf dem entsprechenden LSP empfangen werden.

11. Das Verfahren aus Anspruch 10, wobei der erste Tunnelmodelltyp ein uniformes Tunnelmodell ist, welches jedes Netzwerkelement, welches das erste LSP durchläuft, für ein Netzwerkelement, welches außerhalb des ersten LSP ist, sichtbar macht, und wobei der zweite Tunnelmodelltyp eines von einem Leitungstunnelmodell und einem Kurzleitungstunnelmodell ist, welches nur das Eingangsnetzwerkelement und ein Ausgangsnetzwerkelement veranlasst für ein Netzwerkelement, welches außerhalb des zweiten LSP ist, sichtbar zu sein.

12. Das Verfahren aus Anspruch 10, wobei die erste Label-Mapping-Nachricht weiter ein Mapping zwischen einem ersten Label und einer Weiterleitungs-Äquivalenzklasse (Forwarding Equivalence Class), FEC, umfasst und wobei die zweite Label-Mapping-Nachricht weiter ein Mapping zwischen einem zweiten Label und dem FEC umfasst.

13. Das Verfahren aus Anspruch 10, wobei die erste Label-Mapping-Nachricht weiter ein Mapping zwischen einem ersten Label und einer ersten Weiterleitungs-Äquivalenzklasse (Forwarding Equivalence Class) umfasst und wobei die zweite Label-Mapping-Nachricht weiter ein Mapping zwischen einem zweiten Label und einem zweiten FEC umfasst, wobei das erste FEC sich von dem zweiten FEC unterscheidet.

14. Ein Netzwerkelement, konfiguriert zum Agieren als ein Eingangsnetzwerkelement in einem Multiprotokoll-Label-Switching, MPLS,-Netzwerk, wobei das Netzwerkelement umfasst:
eine oder mehrere Karten, welche jeweils einen Satz von einem oder von mehreren Prozessoren umfassen, welche mit einem nicht flüchtigen maschinenlesbaren Speichermedium verknüpft sind, welches darauf gespeichert hat,
ein Label-Distribution-Protokoll, LDP,-Modul, angepasst zum
Empfangen einer Label-Mapping-Nachricht für jeden einer Vielzahl von unterschiedlichen Label-geschalteten Pfaden (Label Switched Paths), LSPs, entsprechend zur Verwendung in dem
MPLS-Netzwerk, wobei die LSPs sich zwischen dem Eingangsnetzwerkelement und einem Ausgangsnetzwerkelement erstrecken, und wobei jede Label-Mapping-Nachricht eine Angabe eines auf diesen LSP anwendbaren Tunnelmodelltyps umfasst; und wobei jede Label-Mapping-Nachricht durch das Ausgangsnetzwerkelement des entsprechenden LSP übermittelt wird und von einem vorgelagerten Label-Switching-Router, LSR, auf dem entsprechenden LSP empfangen wird; und
ein Anwendungssteuermodul, angepasst zum
Konfigurieren einer Vielzahl von disparaten Anwendungen zur Verwendung in dem MPLS-Netzwerk, wobei jede Anwendung einen unterschiedlichen Typ eines Tunnelmodells erfordert, und
für jede der Vielzahl von Anwendungen, Verknüpfen dieser Anwendung mit einer von der Vielzahl von LSPs basierend auf dem Typ eines für diese Anwendung geforderten Tunnelmodells und dem durch diesen LSP unterstützten Tunnelmodelltyp.

15. Das Netzwerkelement aus Anspruch 14, wobei eine Erste der Vielzahl von Anwendungen ein uniformes Tunnelmodell erfordert, und wobei ein Zweites der Vielzahl von Anwendungen ein Leitungstunnelmodell oder ein Kurzleitungstunnelmodell erfordert.

16. Das Netzwerkelement aus Anspruch 14, wobei jede Label-Mapping-Nachricht ein Mapping zwischen einem unterschiedlichen Label und einer identischen Weiterleitungs-Äquivalenzklasse (Forwarding Equivalence Class), FEC, angibt.

17. Das Netzwerkelement aus Anspruch 14, wobei jede Label-Mapping-Nachricht ein Mapping zwischen einem unterschiedlichen Label und einer unterschiedlichen Weiterleitungs-Äquivalenzklasse (Forwarding Equivalence Class) angibt.

## Revendications

1. Procédé pour un élément de réseau qui agit en tant qu'élément de réseau de sortie dans un réseau de commutation multiprotocole par étiquette, MPLS, pour signaler une pluralité de chemins commutés par étiquette, LSP, pour une pluralité d'applications disparates fournies dans le réseau MPLS qui nécessitent chacune un type différent de modèle de tunnellisation respectivement, le procédé comprenant les étapes qui consistent :
à transmettre un premier message de mise en correspondance d'étiquette pour un premier chemin parmi la pluralité de LSP, le premier message de mise en correspondance d'étiquette comportant une indication d'un premier type de modèle de tunnellisation applicable pour le premier LSP, où le premier LSP doit être utilisé pour transporter un trafic dans le réseau MPLS d'une première application parmi la pluralité d'applications disparates qui nécessite le premier type de modèle de tunnellisation indiqué ; et
à transmettre un deuxième message de mise en correspondance d'étiquette pour un deuxième chemin parmi la pluralité de LSP, le deuxième message de mise en correspondance d'étiquette comportant une indication d'un deuxième type de modèle de tunnellisation applicable pour le deuxième LSP, où le deuxième LSP doit être utilisé pour transporter un trafic dans le réseau MPLS d'une deuxième application parmi la pluralité d'applications disparates qui nécessite le deuxième type de modèle de tunnellisation indiqué, où le premier type de modèle de tunnellisation et le deuxième type de modèle de tunnellisation sont différents ; et où les premier et deuxième messages de mise en correspondance d'étiquette sont transmis au routeur à commutation par étiquette, LSR, amont suivant sur les premier et deuxième LSP respectivement.

2. Procédé de la revendication 1, dans lequel le premier message de mise en correspondance d'étiquette comporte en outre une mise en correspondance entre une première étiquette et une classe d'équivalence de transmission, FEC,
et dans lequel le deuxième message de mise en correspondance d'étiquette comporte en outre une mise en correspondance entre une deuxième étiquette et la FEC.

3. Procédé de la revendication 1, dans lequel le premier message de mise en correspondance d'étiquette comporte en outre un mise en correspondance entre une première étiquette et une première classe d'équivalence de transmission (FEC), et où le deuxième message de mise en correspondance d'étiquette comporte en outre une mise en correspondance entre une deuxième étiquette et une deuxième FEC, où la première FEC est différente de la deuxième FEC.

4. Procédé de la revendication 1, dans lequel le premier type de modèle de tunnellisation est un modèle uniforme qui rend chaque élément de réseau que le premier LSP traverse visible à un élément de réseau qui est externe au premier LSP, et où le deuxième type de modèle de tunnellisation est l'un d'un modèle à canal et d'un modèle à canal court qui amène seulement un élément de réseau d'entrée et l'élément de réseau de sortie à être visibles à un élément de réseau qui est externe au deuxième LSP.

5. Procédé de la revendication 4, dans lequel le premier message de mise en correspondance d'étiquette comporte en outre un mise en correspondance entre une première étiquette et une classe d'équivalence de transmission, où la première étiquette est une étiquette vide qui amène un élément de réseau directement en amont de l'élément de réseau de sortie à fonctionner dans un mode de suppression à l'avant-dernier saut.

6. Élément de réseau configuré pour agir en tant qu'élément de réseau de sortie dans un réseau de commutation multiprotocole par étiquette, MPLS, l'élément de réseau comprenant :
une ou plusieurs carte (s) comportant chacune un ensemble d'un ou de plusieurs processeur(s) qui est/sont couplé(s) à un support de stockage lisible par machine non transitoire dans lequel sont stockés,
un module de commande d'application adapté pour configurer une pluralité d'applications disparates pour une utilisation dans le réseau MPLS, où chaque application nécessite un type différent de modèle de tunnellisation ; et
un module de protocole de distribution d'étiquette, LDP, adapté pour,
transmettre un message de mise en correspondance d'étiquette afin de signaler un autre chemin commuté par étiquette, LSP, pour chacune des applications configurées, où chaque message de mise en correspondance d'étiquette comporte une indication d'un type de modèle de tunnellisation applicable à ce LSP ; et où chaque message de mise en correspondance d'étiquette est transmis au routeur à commutation par étiquette, LSR, amont suivant sur le LSP respectif.

7. Élément de réseau de la revendication 6, dans lequel chaque message de mise en correspondance d'étiquette que le module LDP est adapté pour transmettre afin de signaler le LSP pour chacune des applications configurées comporte une mise en correspondance entre une étiquette différente et une même classe d'équivalence de transmission.

8. Élément de réseau de la revendication 6, dans lequel chaque message de mise en correspondance d'étiquette que le module LDP est adapté pour transmettre afin de signaler le LSP pour chacune des applications configurées comporte une mise en correspondance entre une étiquette différente et une classe d'équivalence de transmission différente.

9. Élément de réseau de la revendication 6, dans lequel une première application parmi la pluralité d'applications disparates nécessite un type de modèle de tunnellisation uniforme, et où une deuxième application parmi la pluralité d'applications disparates nécessite un type de modèle de tunnellisation à canal ou un type de modèle de tunnellisation à canal court.

10. Procédé pour un élément de réseau qui agit en tant qu'élément de réseau d'entrée dans un réseau de commutation multiprotocole par étiquette, MPLS, et participe dans une pluralité d'applications disparates fournies dans le réseau MPLS qui nécessitent chacune un type différent de modèle de tunnellisation, le procédé comprenant les étapes qui consistent :
à recevoir un premier message de mise en correspondance d'étiquette pour un premier chemin commuté par étiquette, LSP, entre l'élément de réseau d'entrée et un élément de réseau de sortie, le premier message de mise en correspondance d'étiquette comportant une indication d'un premier type de modèle de tunnellisation qui est supporté sur le premier LSP ;
à installer une ou plusieurs entrée(s) de transmission selon le premier message de mise en correspondance d'étiquette reçu ;
à recevoir un deuxième message de mise en correspondance d'étiquette pour un deuxième LSP entre l'élément de réseau d'entrée et l'élément de réseau de sortie, le deuxième message de mise en correspondance d'étiquette comportant une indication d'un deuxième type de modèle de tunnellisation qui est supporté sur le deuxième LSP ;
à installer une ou plusieurs entrée(s) de transmission selon le deuxième message de mise en correspondance d'étiquette reçu ; et
à associer une première application parmi la pluralité d'applications disparates qui nécessite le premier modèle de tunnellisation au premier LSP ; et
à associer une deuxième application parmi la pluralité d'applications disparates qui nécessite le deuxième modèle de tunnellisation au deuxième LSP ;
dans lequel les premier et deuxième messages de mise en correspondance d'étiquette sont transmis par l'élément de réseau de sortie du LSP respectif et sont reçus à partir d'un routeur à commutation par étiquette, LSR, amont sur le LSP respectif.

11. Procédé de la revendication 10, dans lequel le premier type de modèle de tunnellisation est un modèle de tunnellisation uniforme qui rend chaque élément de réseau que le premier LSP traverse visible à un élément de réseau qui est externe au premier LSP, et où le deuxième type de modèle de tunnellisation est l'un d'un modèle de tunnellisation à canal et d'un modèle de tunnellisation à canal court qui amène seulement l'élément de réseau d'entrée et un élément de réseau de sortie à être visibles à un élément de réseau qui est externe au deuxième LSP.

12. Procédé de la revendication 10, dans lequel le premier message de mise en correspondance d'étiquette comporte en outre une mise en correspondance entre une première étiquette et une classe d'équivalence de transmission, FEC, et où le deuxième message de mise en correspondance d'étiquette comporte en outre une mise en correspondance entre une deuxième étiquette et la FEC.

13. Procédé de la revendication 10, dans lequel le premier message de mise en correspondance d'étiquette comporte en outre un mise en correspondance entre une première étiquette et une première classe d'équivalence de transmission, et où le deuxième message de mise en correspondance d'étiquette comporte en outre une mise en correspondance entre une deuxième étiquette et une deuxième FEC, où la première FEC est différente de la deuxième FEC.

14. Élément de réseau configuré pour agir en tant qu'élément de réseau d'entrée dans un réseau de commutation multiprotocole par étiquette, MPLS, l'élément de réseau comprenant :
une ou plusieurs carte(s) comportant chacune un ensemble d'un ou de plusieurs processeur(s) qui est/sont couplé(s) à un support de stockage lisible par machine non transitoire dans lequel sont stockés,
un module de protocole de distribution d'étiquette, LDP, adapté pour,
recevoir un message de mise en correspondance d'étiquette pour chacun d'une pluralité de différents chemins commutés par étiquette, LSP, pour une utilisation dans le réseau MPLS respectivement, où les LSP doivent s'étendre entre l'élément de réseau d'entrée et un élément de réseau de sortie, et où chaque message de mise en correspondance d'étiquette comporte une indication d'un type de modèle de tunnellisation applicable à ce LSP ; et où chaque message de mise en correspondance d'étiquette est transmis par l'élément de réseau de sortie du LSP respectif et est reçu à partir d'un routeur à commutation par étiquette, LSR, amont sur le LSP respectif ; et
un module de commande d'application adapté,
pour configurer une pluralité d'applications disparates pour une utilisation dans le réseau MPLS, où chaque application nécessite un type différent de modèle de tunnellisation, et
pour associer, pour chacune de la pluralité d'applications, cette application à l'un de la pluralité de LSP sur la base du type de modèle de tunnellisation requis pour cette application et du type de modèle de tunnellisation supporté par ce LSP.

15. Élément de réseau de la revendication 14, dans lequel une première application parmi la pluralité d'applications nécessite un modèle de tunnellisation uniforme, et où une deuxième application parmi la pluralité d'applications nécessite un modèle de tunnellisation à canal ou un modèle de tunnellisation à canal court.

16. Élément de réseau de la revendication 14, dans lequel chaque message de mise en correspondance d'étiquette indique une mise en correspondance entre une étiquette différente et une même classe d'équivalence de transmission, FEC.

17. Élément de réseau de la revendication 14, dans lequel chaque message de mise en correspondance d'étiquette indique une mise en correspondance entre une étiquette différente et une classe d'équivalence de transmission différente.
